# EUROPÄISCHE PATENTSCHRIFT

(11) **EP 2 242 788 B1**
(45) Veröffentlichungstag und Bekanntmachung des Hinweises auf die Patenterteilung: **29.03.2017**
(21) Anmeldenummer: 09710342.8
(22) Anmeldetag: 31.01.2009
(51) Int. Cl.: C08G 64/24, C08G 64/14

(54) **ALKYLPHENOL ZUR EINSTELLUNG DES MOLEKULARGEWICHTES UND POLYCARBONATZUSAMMENSETZUNGEN MIT VERBESSERTEN EIGENSCHAFTEN**
ALKYLPHENOL FOR ADJUSTING THE MOLECULAR WEIGHT, AND POLYCARBONATE COMPOSITIONS HAVING IMPROVED PROPERTIES
ALKYLPHÉNOL POUR L AJUSTEMENT DU POIDS MOLÉCULAIRE ET COMPOSITIONS DE POLYCARBONATE PRÉSENTANT DES PROPRIÉTÉS AMÉLIORÉES

(30) Priorität: 13.02.2008 DE 102008008842
(43) Veröffentlichungstag der Anmeldung: 27.10.2010
(73) Patentinhaber: Covestro Deutschland AG, 51373 Leverkusen (DE)
(72) Erfinder: WEHRMANN, Rolf, 47800 Krefeld (DE); HEUER, Helmut-Werner, 47829 Krefeld (DE); RUYTINX, Bert, B-3545 Halen (BE)
(74) Vertreter: Levpat
(86) Internationale Anmeldenummer: PCT/EP2009/000646
(87) Internationale Veröffentlichungsnummer: WO 2009/100828

(56) Entgegenhaltungen:
- EP-A- 1 249 463
- WO-A-01/19892
- WO-A-94/18258
- WO-A-2004/063249

## Beschreibung

Die Erfindung betrifft die Verwendung spezieller Phenole zur Einstellung des Molekulargewichtes von Polycarbonaten.

Polycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen besondere mechanische Eigenschaften gefordert sind. Ein weiteres großes Einsatzgebiet sind optische Datenspeicher wie die verschiedenen CD- und DVD-Formate sowie Bluray Disc und HD-DVD, sowie Extrusionsanwendungen wie Polycarbonatplatten, diffuser sheets und andere Displayanwendungen oder Wasserflaschen, aber auch optische Anwendungen im Automobilbereich, wie Verscheibungen, Kunststoffabdeckungen, Streuscheiben oder Lichtleiterlemente sowie Lampenabdeckungen für Langfeldleuchten.

Bei diesen Anwendungen werden fast immer die guten thermischen und mechanischen Eigenschaften wie Vicat-Temperatur (Wärmeformbeständigkeit), Glastemperatur und Schlagzähigkeit zwingend benötigt.

Es ist bekannt, dass diese Eigenschaften bei Polymeren vom Molekulargewicht abhängig sind. Generell nehmen sie mit steigendem Molekulargewicht zu und nähern sich einem Grenzwert. Dabei ist aber nicht nur das Molekulargewicht an sich, sondern die molekulare Uneinheitlichkeit U = (Mw/Mn) - 1 von Bedeutung. Große Uneinheitlichkeiten sollten sich negativ auf die thermischen und mechanischen Eigenschaften der Polycarbonate auswirken. Das Molekulargewicht wiederum hat einen direkten Einfluss auf die Viskosität (Lösungs- und Schmelzviskosität) und damit auf die Fließfähigkeit einer polymeren Schmelze bei gegebener Verarbeitungstemperatur. Hochmolekulare Produkte fließen jedoch schlechter und lassen sich daher nur mit deutlich geringeren Zykluszeiten verarbeiten. Um auch bei niedrigerem Molekulargewicht die notwendige Mechanik und Wärmeformbeständigkeit zu erfüllen ist daher dieser Weg nicht gangbar. Weiterhin ist bekannt, dass niedermolekulare Verbindungen und Oligomere sich negativ auf die thermischen und mechanischen Eigenschaften von Polymeren auswirken.

Alkylphenole, insbesondere p-tert. Butylphenol (im Folgenden vereinfacht BUP genannt) als Kettenabbrecher zur Herstellung von Polycarbonat sind bekannt (EP-A 1,249,463 und WO 2004/063249). Die zitierten Schriften beschreiben jedoch nicht die Verwendung von Alkylphenolen zur Herstellung von Polycarbonat mit einer definierten Molekulargewichtsverteilung.

Es bestand daher die Aufgabe Polycarbonat mit einer definierten Molekulargewichtsverteilung, bei der der Anteil niedermolekularer Verbindungen und Oligomere sowie hochmolekulare Anteile verringert werden d. h. die Uneinheitlichkeit U = (Mw/Mn) - 1 kleiner wird herzustellen, und gleichzeitig die thermischen (Vicat-Temperatur) und mechanischen Eigenschaften (z.B. Kerbschlagzähigkeit insbesondere bei tiefen Temperaturen) verbessert werden.

Weiterhin bestand die Aufgabe, aromatische Polycarbonatzusammensetzungen mit verbesserter Wärmeformbeständigkeit und Schlagzähigkeit zu entwickeln.

Überraschenderweise wurde gefunden, dass die für die Einstellung des Molekulargewichtes und damit der Viskosität verwendeten Kettenabbrecher p-tert. Butylphenol oder n-Butylphenol zur Konti-Herstellung von Polycarbonaten einen entscheidenden Einfluss auf den Verlauf der GPC-Kurven, d.h. auf die Molekulargewichtsverteilung und damit auch auf den Anteil von zu vermeidenden niedermolekularen Verbindungen und Oligomeren haben. Diese Maßnahme zur gezielten Verbesserung der Molekulargewichtsverteilung, d. h. engere Verteilung bzw. geringere Uneinheitlichkeit U = (Mw/Mn) -1 und deren Einstellung und Abhängigkeit von der Art des Kettenabbrechers in einem Kontiprozess nach dem Phasengrenzflächenverfahren, war bisher nicht bekannt. Dies stellt ein wichtiges Kriterium für mechanische und thermische Performance des spritzgegossenen bzw. extrudierten Bauteils dar. Aus den auf diese Weise erhaltenen Polycarbonaten hergestellte erfindungsgemäße Polycarbonatzusammensetzungen und die daraus erhältlichen Spritzgussteile und Extrudate weisen signifikant verbesserte thermische (Glastemperatur Tg sowie Vicat-Temperatur) und mechanische Eigenschaften (Zähgigkeit, Kugeleindrucktemperatur und Kerbschlagzähigkeit, insbesondere bei tiefen Temperaturen) auf.

Gegenstand der vorliegenden Erfindung ist daher die Verwendung von
p-tert.-Butylphenol oder n-Butylphenol in einem kontinuierlichen Phasengrenzflächenverfahren zur Herstellung von linearem oder verzweigtem Polycarbonat mit einer Uneinheitlichkeit U, wobei die Uneinheitlichkeit für verschiedene Molekulargewichtsbereiche wie folgt ist: U = (Mw/Mn) - 1
für niedrigviskoses PC mit einem mittleren Molekulargewicht (Gewichtsmittel) von 18.000 bis 22.000 g/mol beträgt U 1,08 bis 1,18, bevorzugt 1,10 bis 1,16,
für mittelviskoses PC mit einem mittleren Molekulargewicht (Gewichtsmittel) von größer 22.000 bis 26.000 g/mol beträgt U 1,18 bis 1,60 , bevorzugt 1,20 bis 1,55, besonders bevorzugt 1,20 bis 1,50,
für hochviskoses PC mit einem mittleren Molekulargewicht (Gewichtsmittel) von größer 26.000 bis 40.000 g/mol beträgt U 1,30 bis 1,75, bevorzugt bevorzugt 1,35 bis 1,60, insbesondere 1,35 bis 1,55.

Ganz besonders bevorzugt ist p-tert. Butylphenol.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die thermoplastischen Polycarbonate, Copolycarbonate einschließlich der thermoplastischen, aromatischen Polyestercarbonate, beide unter dem Begriff Polycarbonat zusammengefasst, haben die oben genannten Molekulargewichte M_{w} (Gewichtsmittel Mw, ermittelt durch Gelpermeationschromatographie (GPC) Messung, Polycarbonateichung). Molekulargewichte lassen sich auch durch die Zahlenmittel Mn angeben, welche ebenfalls nach vorheriger Eichung auf Polycarbonat mittels GPC bestimmt werden.

Die Uneinheitlichkeit U = (Mw/Mn) - 1 als Maß für die Molekulargewichtsverteilung der Polycarbonatzusammensetzungen PC kann somit für verschiedene Molekulargewichtsbereiche ermittelt werden.

Entsprechende Zusammensetzungen enthalten
oben genanntes Polycarbonat mit p-tert.-Butylphenol oder n-Butylphenol
A) als Endgruppe, wobei je nach Molekulargewichtsbereich die Uneinheitlichkeit die oben angegebenen Werte aufweist, und
B) mindestens ein Additiv ausgewählt aus der Gruppe bestehend aus Thermostabilisator, Entformungsmittel und Lichtschutzmittel.

Die Zusammensetzung enthält im Allgemeinen 0,001 bis 1, bevorzugt 0,005 bis 0,8, besonders bevorzugt 0,04 bis 0,5 Gew.-% (bezogen auf die Gesamtzusammensetzung) Additive gemäß Komponente B).

Als Thermostabilisator eignen sich bevorzugt Tris-(2,4-di-tert-butylphenyl)phosphit, Tetrakis(2,4-di-tert.-butylphenyl)[1,1biphenyl]-4,4-diylbisphosphonitTriisooctylphosphat, Octadecyl-3-(3,5-di-tert.butyl-4-hydroxyphenyl)proprionat (Irganox 1076), Bis(2,4-dicumylphenyl) pentaerythritoldiphosphit (Doverphos S-9228), Bis (2,6-ditert.butyl-4-methylphenyl)pentaerythritoldiphosphit (ADK STAB PEP-36) oder Triphenylphosphin. Sie werden allein oder im Gemisch , z. B. Irganox B 900 eingesetzt.

Als Entformungsmitttel eignen sich bevorzugt Pentaerythrittetrastearat, Glycerinmonostearat, Stearylstearat oder Propandiolstearat. Sie werden allein oder im Gemisch eingesetzt.

Als Lichtschutzmittel eignen sich bevorzugt Benzotriazole, Triazine, Benzophenol, Cyanacrylate, Zimtsäureester oder Oxalimide. Sie werden alleine oder im Gemisch eingesetzt.

Die Herstellung der erfindungsgemäß zu verwendenden Polycarbonate erfolgt prinzipiell in bekannter Weise aus Diphenolen, Kohlensäurederivaten und gegebenenfalls Verzweigern.

Allgemein ist das Verfahren zur Polycarbonatsynthese bekannt und in zahlreichen Publikationen beschrieben. EP-A 0 517 044, WO 2006/072344, EP-A 1 609 818, WO 2006/072344 und EP-A 1 609 818 und dort zitierte Dokumente beschreiben beispielsweise das Phasengrenzflächen- und das Schmelzeverfahren zur Herstellung von Polycarbonat.

Aus dem Stand der Technik ist jedoch nicht ersichtlich, welche Maßnahmen bereits bei der Synthese getroffen werden müssen, um ein Polycarbonat in einem kontinuierlichen Verfahren mit sehr guter Kerbschlagzähigkeit und verbesserter Wärmeformbeständigkeit zu erhalten. Insbesondere war kein Hinweis auf den Einfluß des Kettenabbrechers auf die Uneinheitlichkeit U bekannt.

Beim Konti-Verfahren zur Herstellung von aromatischen Polycarbonaten bzw. Copolycarbonaten mit engerer Molekulargewichtsverteilung nach dem sogenannten Phasengrenzflächenverfahren. gemäß vorliegender Erfindung erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels bzw. bevorzugt eines Lösungsmittelgemisches, welches eine zweite Phase ausbildet. Die entstehenden, hauptsächlich in der organischen Phase vorliegenden Oligocarbonate werden mit Hilfe geeigneter Katalysatoren zu, in der organischen Phase gelösten, Polycarbonaten mit dem gewünschten Molekulargewicht aufkondensiert. Die organische Phase wird schließlich abgetrennt und das Polycarbonat durch verschiedene Aufarbeitungsschritte, bevorzugt durch Ausdampfextruder bzw. Strangverdampfer, daraus isoliert. Der entscheidende Schritt zur Erlangung von Produkten mit sehr guter Kerbschlagzähigkeit und verbesserter Wärmeformbeständigkeit besteht darin, dieses kontinuierliche Verfahren so auszuführen, dass eine möglichst enge Molekulargewichtsverteilung des Polycarbonates, d.h. geringe Uneinheitlichkeit, bereits bei der Synthese und ohne spezielle Aufarbeitung, wie z.B. Fällung oder Sprühverdampfung, erhalten wird. Dies wird erfindungsgemäß durch die geeignete Wahl des Kettenabbrechers erreicht, der zu einer geringeren Uneinheitlichkeit führt.

Für die Herstellung von Polycarbonaten geeignete Dihydroxyarylverbindungen sind solche der Formel (2) in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3) 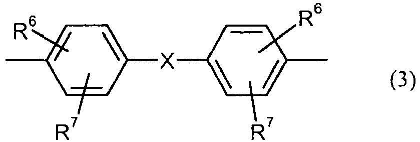 in der
R⁶ und R⁷ unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, -O-, -SO-,-CO-, -S-, -SO₂-, besonders bevorzugt steht X für eine Einfachbindung, Isopropyliden oder Sauerstoff.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol.

Besonders bevorzugte Diphenole sind 2,2-Bis-(4-hydroxyphenyl)-propan (BPA), 4,4'-Dihydroxydiphenyl (DOD) und 2,2-Bis-(3-methyl-4-hydroxyphenyl)-propan.

Diese und weitere geeignete Diphenole sind z.B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der franzoesischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

In diesem Verfahren wird eine wässrige Phase aus NaOH, einem oder mehreren Bisphenolen und Wasser verwendet, wobei die Konzentration dieser wässrigen Lösung bezüglich der Summe der Bisphenol, nicht als Natriumsalz sondern als freies Bisphenol gerechnet, zwischen 1 und 30 Gew. %, bevorzugt zwischen 3 und 25 Gew. %, besonders bevorzugt zwischen 3 und 8 Gew. % für Polycarbonate mit einem Mw>45000 und 12 bis 22 Gew. % für Polycarbonate mit einem Mw< 45000, variieren kann. Dabei kann es bei höheren Konzentrationen notwendig sein, die Lösungen zu temperieren. Das zur Lösung der Bisphenole verwendete Natriumhydroxid kann fest oder als wässrige Natronlauge verwendet werden. Die Konzentration der Natronlauge richtet sich nach der Zielkonzentration der angestrebten Bisphenolatlösung, liegt aber in der Regel zwischen 5 und 25 Gew.-%, bevorzugt 5 und 10 Gew.-%., oder aber wird konzentrierter gewählt und anschließend mit Wasser verdünnt. Bei dem Verfahren mit anschließender Verdünnung werden Natronlaugen mit Konzentrationen zwischen 15 und 75 Gew. %, bevorzugt 25 und 55 Gew.-%, gegebenenfalls temperiert, verwendet. Der Alkaligehalt pro mol Bisphenol ist sehr von der Struktur des Bisphenols abhängig, bewegt sich aber in der Regel zwischen 0,25 mol Alkali / mol Bisphenol und 5,00 mol Alkali / mol Bisphenol, bevorzugt 1,5 - 2,5 Mol Alkali / mol Bisphenol und im Fall, dass Bisphenol A als alleiniges Bisphenol verwendet wird, 1,85 - 2,15 mol Alkali. Wird mehr als ein Bisphenol verwendet, so können diese zusammen gelöst werden. Es kann jedoch vorteilhaft sein, die Bisphenole getrennt in optimaler alkalischer Phase zu lösen und die Lösungen getrennt zu dosieren oder aber vereinigt der Reaktion zuzuführen. Weiterhin kann es von Vorteil sein, das oder die Bisphenole nicht in Natronlauge sondern in mit zusätzlichem Alkali ausgestatteter, verdünnter Bisphenolatlösung zu lösen. Die Lösevorgänge können von festem Bisphenol, meist in Schuppen oder Prillform oder auch von geschmolzenem Bisphenol ausgehen. Das eingesetzte Natriumhydroxid bzw. die Natronlauge kann nach dem Amalgamverfahren oder dem sogenannten Membranverfahren hergestellt worden sein. Beide Verfahren werden seit langer Zeit benutzt und sind dem Fachmann geläufig. Bevorzugt wird Natronlauge aus dem Membranverfahren verwendet.

Die so angesetzte wässrige Phase wird zusammen mit einer organischen Phase bestehend aus Lösungsmitteln für Polycarbonat, die gegenüber den Reaktanten inert sind und eine zweite Phase bilden, phosgeniert.

Die gegebenenfalls praktizierte Dosierung von Bisphenol nach oder während der Phosgeneinleitung kann so lange durchgeführt werden, wie Phosgen in der Reaktionslösung vorhanden ist oder dessen unmittelbare Folgeprodukte, die Chlorkohlensäureester.

Die Synthese von Polycarbonaten aus Bisphenolen und Phosgen im alkalischen Milieu ist eine exotherme Reaktion und wird in einem Temperaturbereich von -5° C bis 100° C, bevorzugt 15°C bis 80°C, ganz besonders bevorzugt 25°C - 65°C durchgeführt, wobei je nach Lösungsmittel oder Lösungsmittelgemisch gegebenenfalls unter Überdruck gearbeitet werden muss.

Die organische Phase kann aus einem oder Mischungen mehrerer Lösungsmittel bestehen, wobei Mischungen bevorzugt sind. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch oder zusätzlich oder im Gemisch mit chlorierten Kohlenwasserstoffen verwendet werden. Eine andere Ausführungsform der Synthese verwendet Lösungsmittel welche Polycarbonat nicht lösen sondern nur anquellen. Es können daher auch Nichtlösungsmittel für Polycarbonat in Kombination mit Lösungsmitteln verwendet werden. Wobei dann als Lösungsmittel auch in der wässrigen Phase lösliche Lösungsmittel wie Tetrahydrofuran, 1,3/1,4-Dioxan oder 1,3-Dioxolan verwendet werden können, wenn der Lösungsmittelpartner die zweite organische Phase bildet. Bevorzugt sind jedoch Gemische aus Methylenchlorid und Chlorbenzol mit einem Mischungsverhältnis (Gewichtsverhältnis) von 60:40 bis 55:45.

Die beiden Phasen die das Reaktionsgemisch bilden werden gemischt, um die Reaktion zu beschleunigen. Das geschieht durch Eintrag von Energie über Scherung, d.h. Pumpen oder Rührer oder durch statische Mischer bzw. durch Erzeugung turbulenter Strömung mittels Düsen und/oder Blenden. Auch Kombinationen dieser Massnahmen werden angewendet, oft auch wiederholt in zeitlicher oder apparativer Abfolge. Als Rührer werden bevorzugt Anker-, Propeller-, MIG-Rührer, usw. eingesetzt, wie sie z.B. im Ullmann, "Encyclopedia of Industrial Chemistry", 5. Auflage, Vol B2 , S. 251 ff. beschrieben sind. Als Pumpen werden Kreiselpumpen, oft auch mehrstufige, wobei 2- bis 9-stufige bevorzugt sind, eingesetzt. Als Düsen und/oder Blenden werden Lochblende bzw. an deren Stelle verjüngte Rohrstücke oder auch Venturi- oder Lefosdüsen eingesetzt.

Der Eintrag des Phosgens kann gasförmig oder flüssig oder gelöst in Lösungsmittel erfolgen. Der verwendete Überschuss an Phosgen, bezogen auf die Summe der eingesetzten Bisphenole liegt zwischen 3 und 100 Mol % bevorzugt zwischen 5 und 50 Mol %. Wobei über einmalige oder mehrfache Nachdosierung von Natronlauge oder entsprechende Nachdosierung von Bisphenolatlösung der pH-Wert der wässrigen Phase während und nach der Phosgendosierung im alkalischen Bereich, bevorzugt zwischen 8,5 und 12 gehalten wird, während er nach der Katalysatorzugabe bei 10 bis 14 liegen sollte. Die Temperatur während der Phosgenierung beträgt 25°C bis 85°C, bevorzugt 35°C bis 65°C, wobei je nach verwendetem Lösungsmittel auch unter Überdruck gearbeitet werden kann.

Die Phosgendosierung kann direkt in das beschriebene Gemisch der organischen und wässrigen Phase erfolgen oder aber auch ganz oder teilweise, vor der Mischung der Phasen, in eine der beiden Phasen, die anschließend mit der entsprechenden anderen Phase gemischt wird. Weiterhin kann das Phosgen ganz oder teilweise in einen rückgeführten Teilstrom des Synthesegemisches aus beiden Phasen dosiert werden, wobei dieser Teilstrom vorzugsweise vor der Katalysatorzugabe rückgeführt wird. In einer anderen Ausführungsform werden die beschriebene wässrige Phase mit der das Phosgen enthaltenden organischen Phase gemischt und anschließend nach einer Verweilzeit von 1 Sekunde bis 5 min, bevorzugt 3 Sekunden bis 2 Minuten dem oben erwähnten rückgeführten Teilstrom zugesetzt oder aber die beiden Phasen, die beschriebene wässrige Phase mit der das Phosgen enthaltenden organischen Phase werden direkt in dem oben erwähnten rückgefuhrten Teilstrom gemischt. In allen diesen Ausführungsformen sind die oben beschriebenen pH-Wertbereiche zu beachten und gegebenenfalls durch einmalige oder mehrfache Nachdosierung von Natronlauge oder entsprechende Nachdosierung von Bisphenolatlösung einzuhalten. Ebenso muss der Temperaturbereich gegebenenfalls durch Kühlung oder Verdünnung eingehalten werden.

Die Durchführung der Polycarbonatsynthese erfolgt kontinuierlich. Die Reaktion kann in daher in Umpumpreaktoren, Rohrreaktoren, oder Rührkesselkaskaden oder deren Kombinationen erfolgen, wobei durch Verwendung der bereits erwähnten Mischorgane sicherzustellen ist, daß wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Die zur Regelung des Molekulargewichtes benötigten monofunktionellen Kettenabbrecher p-tert.-Butylphenol oder n-Butylphenol werden als solche oder in Form ihrer Chlorkohlensäureester, entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

Die Menge an einzusetzenden Kettenabrecher beträgt 0,5 Mol-% bis 10 Mol-%, bevorzugt 1 Mol-% bis 8 Mol-%, besonders bevorzugt 2 Mol-% bis 6 Mol-% bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 Gew.%-ig).

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin, besonders bevorzugt Triethylamin und N-Ethylpiperidin.. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen, insofern sie eingelegt werden, zwischen 10 Sekunden und 60 Minuten, bevorzugt zwischen 30 sec. und 40 Minuten, besonders bevorzugt zwischen 1 und 15 min. Diese erfolgen dann in Verweilreaktoren.

Das ausreagierte, höchstens noch Spuren an (<2 ppm) Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wäßrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z. B. der Chloralkalielektrolyse zugeführt werden kann, während die wäßrige Phase gegebenenfalls wieder der Synthese zugeführt wird.

Die organische, das Polymer enthaltende Phase muss nun von allen Kontaminationen alkalischer, ionischer oder katalytischer Art gereinigt werden.
Die organische Phase enthält auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie den Katalysator, in der Regel ein tert. Amin.

Nach dieser groben Abtrennung der alkalischen, wässrigen Phase wird die organische Phase ein oder mehrmals mit verdünnten Säuren, wie Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew. %, bevorzugt 0,01 bis 5 Gew. % liegen.
Weiterhin wird die organische Phase mit entsalztem oder destilliertem Wasser wiederholt gewaschein. Die Abtrennung der, gegebenenfalls mit Teilen der wäßrigen Phase dispergierten, organischen Phase nach den einzelnen Waschschritten geschieht mittels Absetzkessel, Rührkessel, Coalescer oder Separatoren bzw. Kombinationen aus diesen Massnahmen, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas und Phosphorsäure oder phosphorige Säure verwendet, die gegebenenfalls auch als Mischungen eingesetzt werden können.

Die so erhaltene gereinigte Polymerlösung sollte nach dem letzten Trennvorgang nicht mehr als 5 Gew. %, bevorzugt weniger als 1 Gew. %, ganz besonders bevorzugt weniger als 0,5 Gew. % Wasser enthalten.

Die Isolierung des Polymers aus der Lösung kann durch Verdampfen des Lösungsmittels mittels Temperatur, Vakuum oder eines erhitzten Schleppgases erfolgen.

Geschieht die Konzentrierung der Polymerlösung und eventuell auch die Isolierung des Polymeren durch Abdestillation des Lösungsmittels, gegebenenfalls durch Überhitzung und Entspannung, so spricht man von einem 'Flash-Verfahren" siehe auch "Thermische Trennverfahren", VCH Vcrlagsanstalt 1988, S. 114; wird statt dessen ein geheiztes Trägergas zusammen mit der einzudampfenden Lösung versprüht, so spricht man von einer 'Sprühverdampfung/Sprühtrocknung" beispielhaft beschrieben in Vauck, "Grundoperationen chemischer Verfahrenstechnik", Deutscher Verlag für Grundstoffindustrie 2000, 11.Auflage, S. 690. Alle diese Verfahren sind in der Patentliteratur und in Lehrbüchern beschrieben und dem Fachmann geläufig.
Bei der Entfernung des Lösungsmittels durch Temperatur (Abdestillieren) oder dem technisch effektiveren Flash-Verfahren erhält man hochkonzentrierte Polymerschmelzen. Bei dem bekannten Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschliessend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen sondern bevorzugt ein zwei- bis vierstufigen Verfahren zu wählen.

Aus den so erhaltenen hochkonzentrierten Polymerschmelzen können die Reste des Lösungsmittels entweder direkt aus der Schmelze mit Ausdampfextrudern (BE-A 866 991, EP-A 0 411 510, US-A 4 980 105, DE-A 33 32 065), Dünnschichtverdampfern (EP-A 0 267 025), Fallfilmverdampfern, Strangverdampfern oder durch Friktionskompaktierung (EP-A 0 460 450), gegebenenfalls auch unter Zusatz eines Schleppmittels, wie Stickstoff oder Kohlendioxid oder unter Verwendung von Vakuum (EP-A 0 039 96, EP-A 0 256 003, US-A 4 423 207), entfernt werden, alternativ auch durch anschließende Kristallisation (DE-A 34 29 960) und Ausheizen der Reste des Lösungsmittels in der festen Phase (US-A 3 986 269, DE-A 20 53 876).

Granulate erhält man, wenn möglich, durch direktes Abspinnen der Schmelze und anschließender Granulierung oder aber durch Verwendung von Austragsextrudern von denen in Luft oder unter Flüssigkeit, meist Wasser, abgesponnen wird. Werden Extruder benutzt, so kann man der Schmelze, vor diesem Extruder, gegebenenfalls unter Einsatz von statischen Mischern oder durch Seitenextruder im Extruder, Additive zusetzen.

Abkühlung, Abspinnung, Granulierung und der anschließende Transport oder die Förderung des Granulates mit Gas oder Flüssigkeit, und die anschließende Lagerung, gegebenenfalls nach einem Durchmischungs- oder Homogenisierungsprozeß, sind so zu gestalten, dass möglichst trotz der möglicherweise vorhandenen statischen Aufladung keine Verunreinigungen auf die Polymer-, Strang- oder Granulatoberfläche aufgebracht werden, wie beispielsweise Staub, Abrieb aus den Maschinen, aerosolartige Schmiermittel und andere Flüssigkeiten sowie Salze aus möglicherweise verwendeten Wasserbädern oder Kühlungen.

Die so erhaltenen Materialien werden wie bei der Sprühverdampfung beschrieben zu Granulat verarbeitet und gegebenenfalls additiviert.

Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodilikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hahns Zweifel, Hanser, München 2001 " oder in WO 99/55772, S. 15-25.

Übliche Additive sind beispielsweise Füllstoffe, von Komponente B verschiedene UV-Stabilisatoren, von Komponente B) verschiedene Thermostabilisatoren, Antistatika, Pigmente, von Komponente B) verschiedene Entformungsmittel, Fließhilfsmittel und Flammschutzmittel. Beispielsweise können Alkyl- und Arylphosphite, -phosphate, -phosphane, niedermolekulare Carbonsäureester, Halogenverbindungen, Salze, Kreide, Quarzmehl, Glas- und Kohlenstofffasern, und deren Kombinationen eingesetzt werden.

Desweiteren können Farbmittel, wie organische Farbstoffe oder Pigmente oder anorganische Pigmente, IR-Absorber, einzeln, im Gemisch oder auch in Kombination mit Stabilisatoren, Glas(hohl)kugeln, anorganischen Füllstoffen oder organische oder anorganische Streupigmente zugesetzt werden.

Die erfindungsgemäßen Polycarbonate und Polycarbonat-Zusammensetzungen können auf üblichen Maschinen, beispielsweise auf Extrudern oder Spritzgussmaschinen, zu beliebigen Formkörpern, bzw. Formteile zu Folien oder Platten oder Flaschen, in üblicher Weise verarbeitet werden.

Die so erhältlichen Polycarbonate mit enger Molekulargewichtsverteilung gemäß vorliegender Erfindung und daraus erhältliche Polycarbonat-Zusammensetzungen, können zur Herstellung von Extrudaten (Platten, Folien und deren Laminate, z. B. für Kartenanwendungen und Rohre) und Formkörpern (Flaschen), insbesondere solchen zur Verwendung im transparenten Bereich, besonders im Bereich optischer Anwendungen wie z.B. Platten, Stegplatten, Automobil- und Architektur-Verglasungen, Streu- oder Abdeckscheiben, Lampenabdeckungen, Kunststoffabdeckscheiben, Lichtleitelemente oder optischer Datenspeicher, wie Audio-CD, CD-R(W), DVD, DVD-R(W), Minidiscs in ihren verschiedenen nur lesbaren oder aber einmalbeschreibbaren gegebenenfalls auch wiederholt beschreibbaren Ausführungsformen sowie Datenträger für near-field-Optiken eingesetzt werden. Weiterhin zur Herstellung von Gegenständen für den E/E und IT-Bereich, wie Gehäusebauteile oder Abdeckungen. Weitere optische Anwendungen sind Linsen, Kollimatoren, LEDS, Lichtleiter in LED-Beleuchtungseinheit.

Die Polycarbonat-Zusammensetzungen werden insbesondere zur Herstellung von Compounds, Blends und Bauteilen verwendet, bei denen thermische und mechanische Eigenschaften genutzt werden, wie beispielsweise Gehäuse, Gegenstände im E/E-Bereich, wie Stecker, Schalter, Platten, Lampenhalterungen, -abdeckungen, Automobilbereich wie Lampenfassungen und -abdeckungen, Verscheibungen., Medizinbereich wie Dialysatoren, Konnektoren, Hähne, Verpackung wie Flaschen, Behälter.

Die Extrudate und Formkörper bzw. Formteile aus den erfindungsgemäßen Polymeren sind ebenfalls Gegenstand der vorliegenden Anmeldung.

Weitere mögliche Anwendungen der erfindungsgemäßen Polycarbonatformmassen sind Sicherheitsscheiben, die bekanntlich in vielen Bereichen von Gebäuden, Fahrzeugen und Flugzeugen erforderlich sind, sowie als Schilde von Helmen. Herstellung von Extrusions- und Lösungsfolien für Displays oder Elektromotoren, auch Skifolien. Herstellung von Blaskörpern wie Wasserflaschen (siehe beispielsweise US-Patent 2 964 794). Herstellung von lichtdurchlässigen Platten, insbesondere von Hohlkammerplatten, beispielsweise zum Abdecken von Gebäuden wie Bahnhöfen, Gewächshäusern und Beleuchtungsanlagen. Zur Herstellung von Ampelgehäusen oder Verkehrsschildern. Zur Herstellung von Schaumstoffen (siehe beispielsweise DE-B 1 031 507). Zur Herstellung von Fäden und Drähten (siehe beispielsweise DE-B 1 137 167 und DE-A 1 785 137). Als transluzente Kunststoffe mit einem Gehalt an Glasfasern für lichttechnische Zwecke (siehe beispielsweise DE-A 1 554 020). Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 bis 10 Gew.-% MoS₂, bezogen auf Gesamtgewicht, enthalten. Optische Anwendungen, wie optische Speicher (CD, DVD), Schutzbrillen oder Linsen für Foto- und Filmkameras (siehe beispielsweise DE-A 2 701 173). Lichtübertragungsträger. insbesondere als Lichtleiterkabel (siehe beispielsweise EP-A1 0 089 801). Als Elektroisolierstoffe für elektrische Leiter und für Steckergehäuse sowie Steckverbinder. Als Trägermaterial für organische Fotoleiter. Zur Herstellung von Leuchten, z.B. Scheinwerferlampen, als sogenannte "head-lamps" oder Streulichtscheiben oder Lampenabdeckungen. Für medizinische Anwendungen, z.B. Oxygenatoren, Dialysatoren. Für Lebensmittelanwendungen, wie z.B. Flaschen, Geschirr und Schokoladenformen. Für Anwendungen im Automobilbereich, wo Kontakt zu Kraftstoffen und Schmiermitteln auftreten kann. Für Sportartikel, wie z.B. Slalomstangen. Für Haushaltsartikel, wie z.B. Küchenspülen und Briefkastengehäuse. Für Gehäuse, wie z.B. Elektroverteilerschränke, Elektrogeräte, Haushaltsgeräte. Bauteile von Haushaltsartikeln, Elektro- und Elektronikgeräten. Zur Herstellung von Motorrad- und Schutzhelmen. Automobilteile, wie Verglasungen, Armaturenbretter, Karosserieteile und Stoßdämpfer. Für sonstige Anwendungen, wie z. B. Stallmasttüren oder Tierkäfige.

### Beispiele

### Beispiel 1 bis 8

In einem kontinuierlichen Phasengrenzflächenprozess wurden verschieden Polycarbonate mit jeweils unterschiedlichen Molekulargewichtsverteilungen hergestellt.

Die Reaktion wird kontinuierlich in einer Emulsion geführt, welche aus einem Lösungsmittelgemisch, zusammengesetzt aus 52,2 Gew.-% Methylenchlorid und 47,5 Gew.- % Chlorbenzol, und Wasser besteht. Als Kettenabbrecher werden p-tert-Butylphenol (BUP) und Phenol (PHE) eingesetzt. Als Katalysator wird N-Ethylpiperidin (EPP) bzw. Triethylamin (TEA) verwendet. Die entstehende Polycarbonatlösung wird nach Abtrennen der wässrigen Phase mit Salzsäure sauer gewaschen, und anschließend mittels Tellerseparatoren mittels vollentsalztem Wasser neutral und salzfrei gewaschen. Die so gewaschenen Polycarbonatlösungen werden in einer mehrstufigen thermischen Voreindampfung bis zu einer Konzentration von 60 - 70 Gew.-% Polycarbonat aufkonzentriert. Über eine Ausdampfextruder wird das restliche Lösungsmittel abgedampft und das erhaltene Polycarbonat als Schmelzestrang gewonnen, welcher nach Abkühlung in einem Wasserbad einer Granulierung zugeführt wurde.

Folgende -Reaktionseinstellungen wurden durchgeführt (Angaben in % sind Gewichts-%, sofern nichts anderes angegeben).
- Na-Bisphenolat-Lösung: Durchsatz 650,0 kg/h, Konzentration 14,65 %
- Phosgen: 49,2 kg/h
- Lösungsmittel: 526,0 kg/h
- Natronlauge 1 : 8,34 kg/h; Konzentration 32,0 %
- Natronlauge 2 : 20,9 kg/h; Konzentration 32,0 %
- Kettenabbrecher BUP: 22,0 kg/h (11 % in Lösungsmittel)
- Katalysator EPP: 25,3 kg/h; (3 % in Lösungsmittel)
- Phosgen / Bisphenol A (BPA): 119,3 mol-% bezogen auf die Stoffmenge BPA
- EPP / BPA: 1,6 mol-% bezogen auf die Stoffmenge BPA
- BUP / BPA: 3,8 mol-% bezogen auf die Stoffmenge BPA
- Reaktionstemperatur: 36 °C
- Polycarbonatkonzentration: 16,5 %
- V-Zahl (Viskositätszahl): 25,5 +/- 0,5 cm³ /g gemessen nach ISO 1628-1
- 3-stufige Fahrweise

In der Versuchsreihe wurde der Einfluss des Lösungsmittels, des Katalysators sowie des Kettenabbrechers bzw. entsprechende Kombinationen bei ansonsten gleichen Reaktionseinstellungen durchgeführt. Die Zugabe des Kettenabbrechers erfolgte in der Weise, dass die Zielviskosität (bzw. V-Zahl) erreicht wurde.

Es wurden folgende Konti-Reaktionseinstellungen realisiert, wobei die Polycarbonate gemäß der Beispiele 1 bis 5 in den oben genannten Reaktionseinstellungen durchgeführt wurden, die Polycarbonate gemäß der Beispiele 6 bis 8 analog zur Herstellung der Beispiele 1 bis 5 jedoch mit 100-fach höherem Durchsatz. Lösemittel, Kettenabbrecher und Katalysator sind der Tabelle 1 zu entnehmen.

**Tabelle 1**

| **Beispiel** | **Lösemittel** | **Kettenabbrecher** | **Katalysator** |
|---|---|---|---|
| 1 | MC | BUP | EPP |
| 2 | MC | BUP | TEA |
| 3 | LMG | BUP | EPP |
| 4 | LMG | Phenol | EPP |
| 5 | LMG | Phenol | TEA |
| 6 | LMG | BUP | EPP |
| 7 | LMG | BUP | EPP |
| 8 | LMG | BUP | EPP |

| | | | |
|---|---|---|---|
| MC: Methylenchlorid MCB: Chlorbenzol LMG. Lösungsmittelgemisch (52,5% MC : 47,5% MCB) BUP: para-tertiär Butylphenol EPP: Ethylpiperidin TEA: triethylamin | | | |

Die Tg wird nach ISO 11357, die HDT nach ISO 75 bestimmt. Die Lösungsviskosität eta rel wird bestimmt in Methylenchlorid (0,5 g Polycarbonat/l) bei 25°C. Der Stickstoffgehalt wird bestimmt nach Antek. Die Bestimmung von phenolischem OH (Endgruppenbestimmung) in Polycarbonat erfolgt photometrisch nach Komplexierung mit Titantetrachlorid TiCl4 (Kalibrierung mit Bisphenol A).

Die Bestimmung von verseifbarem Chlor (Endgruppenbestimmung) in Polycarbonat erfolgt photometrisch nach Reaktion mit 4-(4-Nitrobenzyl)-pyridin (Kalibrierung mit Bischlorkohlensäureester von Bisphenol A).

Dabei wurden die in Tabelle 2 aufgeführten Polycarbonate mit folgenden thermischen und mechanischen Eigenschaften erhalten:

**Tabelle 2**

| Analyse | Einheit | 1 | 2 | 3 | 4V | 5V |
|---|---|---|---|---|---|---|
| N | ppm | <2 | 17 | 22 | 35 | 70 |
| vers. Cl | % | <0,2 | <0,2 | <0,2 | <0,2 | <0,2 |
| phenolisches OH | ppm | 300 | 180 | 140 | 90 | 100 |
| GPC | | | | | | |
| Mn | | 10124 | 10177 | 12002 | 10236 | 9854 |
| Mw | | 22571 | 22504 | 25908 | 25171 | 23442 |
| D | | 2,23 | 2,21 | 2,23 | 2,46 | 2,38 |
| U | | 1,23 | 1,21 | 1,23 | 1,46 | 1,38 |
| eta rel (Lösungsvikosität) | | 1,249 | 1,249 | 1,264 | 1,267 | 1,253 |
| Vicat VSTB 50 | °C | 146,8 | 147,3 | 147,3 | 144,7 | 143,6 |
| HDT Af | °C | 127,1 | 128,3 | 128,6 | 126,2 | 125,5 |
| HDT Bf | °C | 140,7 | 141,3 | 141,6 | 138,6 | 137,7 |
| **ISO 180/4A+Steilabfall** | | | | | | |
| Raumtemperatur | | | | | | |
| RT | kJ/m² | 10x69z | 10x69z | 10x73z | 10x76z | 10x74z |
| 0°C | kJ/m² | 10x61z | 9x65z | 9x67z | 9x71z | / |
| | | / | 1x16s | 1x15s | 1x5s | 10x30s |

| | | | | | | |
|---|---|---|---|---|---|---|
| V = Vergleich | | | | | | |

Die Einstellungen 4 und 5 (jeweils Einstellungen mit Phenol als Kettenabbrecher) zeigen gegenüber den Einstellungen 1 bis 3 (jeweils mit p-tert-Butylphenol als Kettenabbrecher) signifikant niedrigere Vicat-Temperaturen (ca. 144 °C). Die erfindungsgemäßen Einstellungen mit BUP als Kettenabbrecher liefern dagegen im kontinuierlichen Betrieb höhere Vicat-Temperaturen (ca. 147 °C).

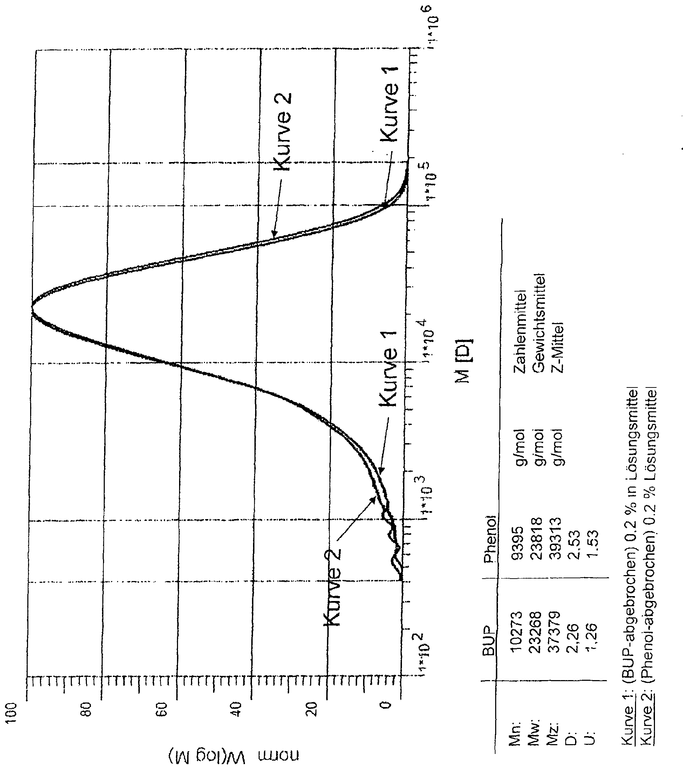

Wie in Figur 1 zu erkennen ist (Vergleich der GPC-Kurven), zeigen Polycarbonate mit BUP als Endgruppe eine signifikant engere Molekulargewichtsverteilung (Uneinheitlichkeit U = 1,26). Man stellt dabei einen anderen - "engeren" - Kurvenverlauf im Bereich niedriger und hoher Molekulargewichte M fest. Dies wird durch die Pfeile in der Figur 1 angezeigt.

### Beispiele 6-8:

Die Herstellung der Polycarbonate gemäß Beispiel 6 bis 8 erfolgte analog zur Herstellung der Beispiele 1 bis 5, jedoch mit 100-fach höherem Durchsatz.
Beispiel 6: PC 1 (erfindungsgemäß) - PC 2 (Vergleich)
Beispiel 7: PC 3 (erfindungsgemäß) - PC 4 (Vergleich)
Beispiel 8: PC 5 (erfindungsgemäß) - PC 6 (Vergleich)

Die Ergebnisse sind in Tabelle 3 zusammengestellt:

**Tabelle 3**

| | | **PC 1** | **PC 2 V** | **PC 3** | **PC 4 V** | **PC 5** | **PC 6 V** |
|---|---|---|---|---|---|---|---|
| **Kettenabbrecher** | | **BUP** | **PHE** | **BUP** | **PHE** | **BUP** | **PHE** |
| eta rel | | - | - | 1,293 | 1,288 | 1,323 | 1,317 |
| Tg | °C | 154,5 | 149 | 151,9 | 149,5 | 152,3 | 149,9 |
| Vicat VSTB 50 | °C | 148,5 | 146,2 | 149,8 | 146,7 | 150,5 | 148,4 |
| HDT A (ISO 75) | °C | 129 | 125,9 | 129,5 | 127,4 | 129,5 | 128 |
| HDT B(ISO 75) | °C | 142,7 | 139,2 | 143,1 | 140,5 | 144 | 142,3 |
| **GPC (RI)** | | | | | | | |
| Mn | | 10141 | 10641 | 11873 | 10950 | 13046 | 11881 |
| Mw | | 26084 | 26970 | 28295 | 27882 | 31607 | 31322 |
| U | | 1,48 | 1,53 | 1,38 | 1,55 | 1,42 | 1,63 |
| **Kerbschlagzähigkeit ISO180/4A** | | | | | | | |
| 23°C | kJ/m² | 82z | 93z | 83z | 86,5z | 87z | 91z |
| 10°C | kJ/m² | | | | | | |
| 0°C | kJ/m² | | | | | | |
| -10°C | kJ/m² | | 9x71z | | | | |
| | | | 1x25s | | | | |
| -20°C | kJ/m² | 78z | 2x81z | 8x78z | 7x83z | 81z | 85z |
| | | | 8x17s | 2x18s | 3x20s | | |
| -30°C | kJ/m² | 8x77z | 16s | 2x77z | 19s | 9x81z | 1x76z |
| | | 2x19s | | 8x19s | | 1x26s | 9x19s |

| | | | | | | | |
|---|---|---|---|---|---|---|---|
| V = Vergleich z = zäh s = spröd | | | | | | | |

Es zeigt sich, dass die erfindungsgemäß hergestellten Polycarbonate eine deutlich bessere Kerbschlagzähigkeit bei tiefen Temperaturen aufweisen als die Vergleichspolycarbonate.

### Beispiel 9:

Verwendung der Polycarbonate aus Beispiel 6 zur Verstellung einer Polycarbonat-Zusammensetzung:
PC1 (BUP als Kettenabbrecher) bzw. PC2 (PHE als Kettenabbrecher) wurden mit 0,025 Gew.-% Triphenylphosphin als Thermostabilisator und 0,4 Gew.-% Pentaerythrittetrrastearat als EntFormungsmittel in einem Zweiwellenextruder gemischt und zu einem Compound compoundiert.

Die Compounds zeigten die in Tabelle 4 angegebenen Werte:

**Tabelle 4:**

| | | Compound aus PC1 | Compound aus PC2 (Vergleich) |
|---|---|---|---|
| MVR 300°C/1,2kg (ISO 1133) | ml/10min | 14,2 | 14,0 |
| Vicat softening Temperature B 50 | °C | 146,7 | 141,2 |
| Kugeleindrucktemperatur IEC 335-1 | °C | 139 | 137 |
| Kugeleindruck bei 135°C Lagerung 24h bei 23°, rel. Luftfeuchte 50% (Durchmesser in mm) | mm | 1,28 | 1,61 |

Man erkennt deutlich, dass die erfindungsgemäße Zusammensetzung enthaltend PC1 im Vergleich zur PC2 enthaltenden Zusammensetzung sowohl eine höhere Vicat Temperatur als auch eine höhere Kugeleindrucktemperatur (KET) aufweist.

### Beispiel 10:

### PC 9 (Vergleich):

Ein verzweigtes Polycarbonat wurde analog Beispiel 4 hergestellt, mit Phenol als Kettenabbrecher und zusätzlich 0,3 Gew.% Isatinbiskresol (IBK) als Verzweigungsmittel; relative Lösungsviskosität: 1,31.

### PC 10 (erfindungsgemäß):

Ein verzweigtes Polycarbonat wurde analog Beispiel 6 hergestellt, mit BUP als Kettenabbrecher und zusätzlich 0,3 Gew.% IBK als Verzweigungsmittel; relative Lösungsviskosität: 1,31.

### Testergebnisse PC 9:

Vicat-Temperatur 149,6° C
HDT-A: 128,2° C
HDT-B: 142,0° C

### Testergebnisse PC 10:

Vicat-Temperatur 152,4° C
HDT-A: 130,2° C
HDT-B: 144,7° C

Das erfindungsgemäße Polycarbonat PC 10 zeigt in allen Fällen eine höhere Wärmeformbeständigkeit als PC 9.

## Patentansprüche

1. Verwendung von p-tert.-Butylphenol oder n-Butylphenol
in einem kontinuierlichen Phasengrenzflächenverfahren zur Herstellung von linearem oder verzweigtem Polycarbonat mit einer Uneinheitlichkeit U, wobei die Uneinheitlichkeit für verschiedene Molekulargewichtsbereiche wie folgt ist: U = (Mw/Mn) - 1
für niedrigviskoses Polycarbonat mit einem mittleren Molekulargewicht (Gewichtsmittel) von 18.000 bis 22.000 g/mol, ermittelt über Gelpermeationschromatographie mit Polycarbonatkalibrierung, beträgt U 1,08 bis 1,18,
für mittelviskoses Polycarbonat mit einem mittleren Molekulargewicht (Gewichtsmittel) von größer 22.000 bis 26.000 g/mol, ermittelt über Gelpermeationschromatographie mit Polycarbonatkalibrierung, beträgt U 1,18 bis 1,60,
für hochviskoses Polycarbonat mit einem mittleren Molekulargewicht (Gewichtsmittel) von größer 26.000 bis 40.000 g/mol, ermittelt über Gelpermeationschromatographie mit Polycarbonatkalibrierung, beträgt U 1,30 bis 1,75.

2. Verwendung gemäß Anspruch 1, wobei die Uneinheitlichkeit U für niedrigviskoses Polycarbonat mit einem mittleren Molekulargewicht (Gewichtsmittel) von 18.000 bis 22.000 g/mol, ermittelt über Gelpermeationschromatographie mit Polycarbonatkalibrierung, 1,10 bis 1,16 beträgt.

3. Verwendung gemäß Anspruch 1, wobei die Uneinheitlichkeit U für mittelviskoses Polycarbonat mit einem mittleren Molekulargewicht (Gewichtsmittel) von größer 22.000 bis 26.000 g/mol, ermittelt über Gelpermeationschromatographie mit Polycarbonatkalibrierung, 1,20 bis 1,50 beträgt.

4. Verwendung gemäß Anspruch 1, wobei die Uneinheitlichkeit U für hochviskoses Polycarbonat mit einem mittleren Molekulargewicht (Gewichtsmittel) von größer 26.000 bis 40.000 g/mol, ermittelt über Gelpermeationschromatographie mit Polycarbonatkalibrierung, 1,35 bis 1,60 beträgt.

5. Verwendung gemäß Anspruch 1, wobei die Uneinheitlichkeit U für mittelviskoses Polycarbonat mit einem mittleren Molekulargewicht (Gewichtsmittel) von größer 22.000 bis 26.000 g/mol, ermittelt über Gelpermeationschromatographie mit Polycarbonatkalibrierung, 1,20 bis 1,50 beträgt.

6. Verwendung gemäß Anspruch 1, wobei die Uneinheitlichkeit U für hochviskoses Polycarbonat mit einem mittleren Molekulargewicht (Gewichtsmittel) von größer 26.000 bis 40.000 g/mol, ermittelt über Gelpermeationschromatographie mit Polycarbonatkalibrierung, 1,35 bis 1,55 beträgt.

## Claims

1. Use of p-tert-butylphenol or n-butylphenol in a continuous interfacial process for the preparation of linear or branched polycarbonate having a inhomogeneity factor U, wherein the inhomogeneity factor for various molecular weight ranges is as follows: U = (Mw/Mn)-1
for low-viscosity polycarbonate having an average molecular weight (weight-average) of from 18,000 to 22,000 g/mol, determined via gel permeation chromatography with polycarbonate calibration, U is 1.08 to 1.18,
for medium-viscosity polycarbonate having an average molecular weight (weight-average) of greater than 22,000 to 26,000 g/mol, determined via gel permeation chromatography with polycarbonate calibration, U is 1.18 to 1.60,
for high-viscosity polycarbonate having an average molecular weight (weight-average) of greater than 26,000 to 40,000 g/mol, determined via gel permeation chromatography with polycarbonate calibration, U is 1.30 to 1.75.

2. Use according to claim 1, wherein for low-viscosity polycarbonate having an average molecular weight (weight-average) of from 18,000 to 22,000 g/mol, determined via gel permeation chromatography with polycarbonate calibration, the inhomogeneity factor U is 1.10 to 1.16.

3. Use according to claim 1, wherein for medium-viscosity polycarbonate having an average molecular weight (weight-average) of greater than 22,000 to 26,000 g/mol, determined via gel permeation chromatography with polycarbonate calibration, the inhomogeneity factor U is 1.20 to 1.50.

4. Use according to claim 1, wherein for high-viscosity polycarbonate having an average molecular weight (weight-average) of greater than 26,000 to 40,000 g/mol, determined via gel permeation chromatography with polycarbonate calibration, the inhomogeneity factor U is 1.35 to 1.60.

5. Use according to claim 1, wherein for medium-viscosity polycarbonate having an average molecular weight (weight-average) of greater than 22,000 to 26,000 g/mol, determined via gel permeation chromatography with polycarbonate calibration, the inhomogeneity factor U is 1.20 to 1.50.

6. Use according to claim 1, wherein for high-viscosity polycarbonate having an average molecular weight (weight-average) of greater than 26,000 to 40,000 g/mol, determined via gel permeation chromatography with polycarbonate calibration, the inhomogeneity factor U is 1.35 to 1.55.

## Revendications

1. Utilisation de p-tert.-butylphénol ou de n-butylphénol dans un procédé continu à l'interface de phases pour la fabrication d'un polycarbonate linéaire ou ramifié ayant une hétérogénéité U, l'hétérogénéité pour différentes plages de poids moléculaire étant la suivante : U = (Mw/Mn) -1
pour un polycarbonate de faible viscosité ayant un poids moléculaire moyen (moyenne en poids) de 18 000 à 22 000 g/mol, calculé par chromatographie par perméation de gel avec étalonnage au polycarbonate, U est de 1,08 à 1,18,
pour un polycarbonate de viscosité moyenne ayant un poids moléculaire moyen (moyenne en poids) de plus de 22 000 à 26 000 g/mol, calculé par chromatographie par perméation de gel avec étalonnage au polycarbonate, U est de 1,18 à 1,60,
pour un polycarbonate de viscosité élevée ayant un poids moléculaire moyen (moyenne en poids) de plus de 26 000 à 40 000 g/mol, calculé par chromatographie par perméation de gel avec étalonnage au polycarbonate, U est de 1,30 à 1,75.

2. Utilisation selon la revendication 1, dans laquelle l'hétérogénéité U pour un polycarbonate de faible viscosité ayant un poids moléculaire moyen (moyenne en poids) de 18 000 à 22 000 g/mol, calculé par chromatographie par perméation de gel avec étalonnage au polycarbonate, est de 1,10 à 1,16.

3. Utilisation selon la revendication 1, dans laquelle l'hétérogénéité U pour un polycarbonate de viscosité moyenne ayant un poids moléculaire moyen (moyenne en poids) de plus de 22 000 à 26 000 g/mol, calculé par chromatographie par perméation de gel avec étalonnage au polycarbonate, est de 1,20 à 1,50.

4. Utilisation selon la revendication 1, dans laquelle l'hétérogénéité U pour un polycarbonate de viscosité élevée ayant un poids moléculaire moyen (moyenne en poids) de plus de 26 000 à 40 000 g/mol, calculé par chromatographie par perméation de gel avec étalonnage au polycarbonate, est de 1,35 à 1,60.

5. Utilisation selon la revendication 1, dans laquelle l'hétérogénéité U pour un polycarbonate de viscosité moyenne ayant un poids moléculaire moyen (moyenne en poids) de plus de 22 000 à 26 000 g/mol, calculé par chromatographie par perméation de gel avec étalonnage au polycarbonate, est de 1,20 à 1,50.

6. Utilisation selon la revendication 1, dans laquelle l'hétérogénéité U pour un polycarbonate de viscosité élevée ayant un poids moléculaire moyen (moyenne en poids) de plus de 26 000 à 40 000 g/mol, calculé par chromatographie par perméation de gel avec étalonnage au polycarbonate, est de 1,35 à 1,55.
